# FASCICULE DE BREVET EUROPEEN

(11) **EP 1 160 297 B1**
(45) Date de publication et mention de la délivrance du brevet: **22.09.2004**
(21) Numéro de dépôt: 01401202.5
(22) Date de dépôt: 11.05.2001
(51) Int. Cl.: C09D 9/00

(54) **Composition décapante, utilisable notamment dans le domaine du bâtiment et du yachting**
Abbeizmittel-Zusammensetzung zur Verwendung im Bausektor und Segelsport
Stripping composition useful in the field of building industry and yachting

(30) Priorité: 26.05.2000 FR 0006755
(43) Date de publication de la demande: 05.12.2001
(73) Titulaire: Atofina, 92800 Puteaux (FR)
(72) Inventeur: Lallier, Jean-Pierre, 95220 Herblay (FR)

(56) Documents cités:
- WO-A-93/18101
- US-A- 4 780 235

## Description

La présente invention porte sur une composition décapante, utilisable notamment dans le domaine du bâtiment, en particulier pour le décapage des revêtements organiques extérieurs tels que les revêtements plastiques épais (RPE), les imperméabilités de façade et les films minces et dans le domaine du yachting pour le décapage des peintures anti-fouling.

Les imperméabilités de façade, d'aspect caoutchouteux sont imperméables à l'air, à l'oxygène et à la vapeur d'eau et sont à base de polymères acrylique ou styrène-acrylique.

Dans le secteur du bâtiment, la plupart des décapants pour peintures sont à base de chlorure de méthylène additivé de méthanol. Ils peuvent être épaissis par des composés cellulosiques et peuvent contenir une charge minérale.

Cependant, on cherche de plus en plus à remplacer le chlorure de méthylène en raison de ses très fortes volatilité et nocivité. Les produits de remplacement du mélange synergique chlorure de méthylène-méthanol existent, mais il sont, en général, beaucoup plus chers et entrent à au moins 90 % en poids de la constitution de la formulation. Les 10 % restants sont constitués par un épaississant (le plus souvent choisi parmi les dérivés cellulosiques ou acryliques), lui-même, généralement encore plus cher que les solvants et les divers additifs : activateur, tensio-actif, inhibiteur de corrosion.

Dans le secteur du yachting, le décapage du revêtement anti-fouling constitué de nombreuses couches de peinture (5 à 10) est effectué par ponçage. Cette façon d'opérer est longue et conduit à beaucoup de poussières. En outre, l'utilisation de formules décapantes à base de chlorure de méthylène est rédhibitoire car elles attaquent le gelcoat qui est un revêtement d'étanchéité.

La présente invention a donc pour objet une composition décapante, utilisable notamment dans le domaine du bâtiment, en particulier pour le décapage des imperméabilités de façade, des revêtements plastiques épais (RPE) et des films minces et dans le domaine du yachting pour le décapage des peintures anti-fouling, caractérisée en ce qu'elle comprend :
(A) au moins un ester dibasique,
(B) au moins un solvant aprotique dipolaire,
(C) au moins une charge inorganique à caractère épaississant,
(D) de l'eau,
(E) au moins un activateur,
(F) au moins un dispersant, et
(G) au moins un épaississant cellulosique.

La composition selon l'invention peut comprendre, pour 100 parties en poids de (A) + (B) + (C) + (D) + (E) + (F) + (G) :
- 10 à 50, en particulier 25 à 45, parties en poids de (A) ;
- 10 à 30, en particulier 15 à 25, parties en poids de (B) ;
- 20 à 40, en particulier 25 à 35, parties en poids de (C) ;
- 10 à 25, en particulier 15 à 20, parties en poids de (D) ;
- 1 à 15, en particulier 1 à 10, parties en poids de (E) ;
- 0,2 à 2, en particulier 0,4 à 1,2 partie en poids de (F) ; et
- 0,2 à 1, en particulier 0,3 à 0,6 partie en poids de (G).

Le ou les esters dibasiques (A) sont notamment choisis parmi les esters dibasiques aliphatiques, en particulier les diesters d'alkyle en C1-C4 d'un ou plusieurs acides dibasiques aliphatiques en C4-C6. On peut citer en particulier le succinate de diméthyle, le glutarate de diméthyle, l'adipate de diméthyle et leurs mélanges;

Les solvants aprotiques dipolaires (B) sont avantageusement choisis parmi le diméthylsulfoxyde, la N-méthylpyrrolidone, le carbonate de propylène, le diméthylformamide, l'acétonitrile, la N-méthylmorpholine, la butyrolactone et le diméthylacétamide. Le diméthylsulfoxyde et la N-méthyl pyrrolidone sont préférés.

Par charge inorganique à caractère épaississant (C), on entend une poudre inorganique, naturelle ou synthétique pouvant conduire à des formulations dont la viscosité est de l'ordre de 6 000 mPa.s à 20 tours/min ou 2 000 mPa.s à 100 tours/min.

La ou les charges inorganiques ont, d'une manière générale, une granulométrie moyenne comprise entre 0,1 et 200 µm, plus particulièrement entre 1 et 100 µm. Une granulométrie plus fine permet d'obtenir la même viscosité en utilisant moins de charge, ce qui n'est pas économiquement souhaitable.

A titre d'exemple de charges inorganiques, on peut citer le carbonate de calcium, la silice, le phosphite de calcium, l'hydroxyde de calcium (Ca(OH)₂), l'argile, la bentonite. De préférence, on utilisera le phosphite de calcium.

Comme activateurs (E) utilisables selon la présente invention, on citera les alkoxypropionates d'alkyle tels que le 3-éthoxy propionate d'éthyle (EEP), les terpènes tels que le D-limonène ou le mélange de ces composés.

De préférence, on utilisera le 3-éthoxy propionate d'éthyle et/ou le D-limonène.

Comme exemple d'agent dispersant (F), on peut citer l'ester phosphorique acide du 2-éthylhexanol, commercialisé par la Société "CECA" sous la dénomination "BEYCOSTAT A081".

Comme exemple d'épaississant cellulosique (G), on peut citer le METHOCELL 311 commercialisé par la Société "DOW CHEMICAL Co.", dont le procédé d'obtention est décrit dans le brevet américain US-A-3 388 082 intitulé "Hydroxypropyl methyl cellulose ethers".

La composition décapante de l'invention s'est avérée être très intéressante ; en effet après qu'on l'ait appliquée puis laissé agir pendant quelques dizaines de minutes, il suffit de pousser les lambeaux secs à l'aide d'une spatule de peintre. On évite des résidus humides, collants, toujours difficiles à éliminer et à traiter, et on obtient la plupart du temps un substrat propre, tel que mur en béton ou en brique.

En outre, dans le secteur du yachting, la composition décapante n'attaque pas la couche de gelcoat qui est un revêtement d'étanchéité généralement en polyester.

La composition décapante selon la présente invention présente également l'avantage d'être stable au stockage.

Les exemples suivants illustrent la présente invention. Dans ces exemples, les ingrédients utilisés sont les suivants :
◆ Ester dibasique :
   DBE= ester dibasique ayant la composition suivante (en % en poids) : adipate diméthyle/glutarate de diméthyle/succi-nate de diméthyle : 15/62/23, commercialisé par la Société "RHONE-POULENC" sous la dénomination "RPDE".
   Solvant aprotique polaire : DMSO
   Activateurs utilisés = D-limonène, le 3-éthoxypropionate d'éthyle de formule C₂H₅O-CH₂CH₂CO₂C₂H₅ ci-après désigné par EEP.
   Epaississant cellulosique = épaississant cellulosique commercialisé par la Société "DOW CHEMICAL Co." sous la dénomination "METHOCELL 311",
   Agent dispersant = ester phosphorique acide du 2-éthylhexanol, commercialisé sous la dénomination "BEYCOSTAT A81",
   CaHPO₃ = phosphite de calcium naturel, produit par la Société "CECA".

Toute les préparations se font à température ambiante (25 °C) et sous agitation (environ 400 tours /min), avec, de préférence, une turbine permettant une dispersion de solides dans les liquides. Les solvants (DMSO, DBE) le D-limonène, l'eau et le dispersant sont introduits d'abord. Puis on ajoute le phosphite de calcium et l'épaississant cellulosique.

Dans ces exemples, toutes les proportions citées sont en parties en poids.

### EXEMPLE DE PREPARATION 1 :

- DMSO 12
- DBE 35
- D-limonène 5
- eau 17
- Beycostat A81 0,5
- méthocel 311 0,4
- phosphite de calcium 30

Le point d'éclair de la formule est de 62 °C.

### EXEMPLE DE PREPARATION 2 :

- DMSO 10,2
- DBE 29,6
- D-limonène 4,2
- EEP 8
- eau 17
- Beycostat A81 0,7
- Methocell 311 0,5
- phosphite de calcium 30

Le point d'éclair de la formule est de 64°C.

### EXEMPLE DE PREPARATION 3 :

- DMSO 12
- DBE 35,1
- EEP 5
- eau 17
- Beycostat A81 0,4
- Methocell 311 0,4
- phosphite de calcium 30

### EXEMPLE DE PREPARATION 4 (non conforme à l'invention):

- DMSO 12,77
- DBE 37,23
- D-limonène 5,32
- Beycostat A81 1,06
- Methocell 311 0,21
- phosphite de calcium 50

Après avoir effectué les trois préparation décrites ci-dessous et les avoir laissé au repos pendant deux jours, on constate que la préparation 4 est devenue figée, alors que les préparations 1, 2 et 3 sont restées coulantes.

La préparation 4 doit donc être agitée pour pouvoir être transvasée ou être mise en dépôt. Les préparations 1, 2 et 3 peuvent être transvasées ou être mises en dépôt sans aucune agitation préliminaire.

### EXEMPLE D'APPLICATION 1 :

Cet exemple d'application traite du décapage bâtiment façade type RPE (revêtement plastique épais). Plus précisément, il s'agit du décapage d'un crépis acrylique d'environ 2 mm d'épaisseur déposé sur brique.

Après dépôt en couche épaisse (0,5 à 1 mm d'épaisseur) des préparations 1, 2, 3 et 4 et attente du temps nécessaire, le revêtement est gratté à la spatule en conduisant à la formation de lambeaux secs.

Sur ce type de revêtement, le temps d'action doit être de 6 h pour la préparation 4, 5 h pour la préparation 1 et 4 h pour les préparations 2 et 3.

### EXEMPLE D'APPLICATION 2 :

Cet exemple d'application traite du décapage bâtiment façade type imper (imperméabilisant de façade) dénommé Paradox (PLASDOX) déposé en 2 couches sur brique.

Sur ce revêtement, les formules 1, 2 et 3 conduisent à un décapage au bout d'environ 1 à 2 h en donnant des lambeaux par raclage à la spatule ;

Les formules 2 et 3 semblent donner de meilleurs résultats en laissant le substrat nu.

### EXEMPLE D'APPLICATION 3 :

Cet exemple d'application concerne l'utilisation des formules 1, 2 ou 3 pour le décapage d'un revêtement anti-fouling d'un bateau de 9 mètres.

Le décapage a été réalisé dans la journée.

## Revendications

1. Composition décapante, **caractérisée en ce qu'**elle comprend :
(A) au moins un ester dibasique,
(B) au moins un solvant aprotique dipolaire,
(C) au moins une charge inorganique à caractère épaississant,
(D) de l'eau,
(E) au moins un activateur,
(F) au moins un dispersant, et
(G) au moins un épaississant cellulosique.

2. Composition décapante selon la revendication 1, **caractérisée en ce qu'**elle comprend, pour 100 parties en poids de (A) + (B) + (C) + (D) + (E) + (F) + (G) :
- 10 à 50 parties en poids de (A),
- 10 à 30 parties en poids de (B),
- 20 à 40 parties en poids de (C),
- 10 à 25 parties en poids de (D),
- 1 à 15 parties en poids de (E),
- 0,2 à 2 parties en poids de (F), et
- 0,2 à 1 partie en poids de (G).

3. Composition décapante selon la revendication 2, **caractérisée en ce qu'**elle comprend, pour 100 parties en poids de (A) + (B) + (C) + (D) + (E)+(F)+(G) :
- 25 à 45 parties en poids de (A),
- 15 à 25 parties en poids de (B),
- 25 à 35 parties en poids de (C),
- 15 à 20 parties en poids de (D),
- 1 à 10 parties en poids de (E),
- 0,4 à 1,2 partie en poids de (F), et
- 0,3 à 0,6 partie en poids de (G).

4. Composition décapante selon l'une des revendications 1 à 3, **caractérisée en ce que** les esters dibasiques (A) sont choisis parmi les esters dibasiques aliphatiques, en particulier les diesters d'alkyle en C₁-C₄ d'un ou plusieurs acides dibasiques aliphatiques en C₄-C₆.

5. Composition décapante selon la revendication 4, **caractérisée en ce que** le ou les esters dibasiques (A) sont choisis parmi le succinate de diméthyle, le glutarate de diméthyle, l'adipate de diméthyle et leurs mélanges.

6. Composition décapante selon l'une des revendications 1 à 3, **caractérisée en ce que** le ou les solvants aprotiques dipolaires (B) sont choisis parmi le diméthylsulfoxyde, la N-méthylpyrrolidone, le carbonate de propylène, le diméthylformamide, l'acétonitrile, la N-méthylmorpholine, la butyrolactone et le diméthylacétamide.

7. Composition décapante selon l'une des revendications 1 à 3, **caractérisée en ce que** la charge inorganique (C) est le phosphite de calcium.

8. Composition décapante selon l'une des revendications 1 à 3, **caractérisée en ce que** l'activateur (E) est le 3-éthoxy propionate d'éthyle et/ou le D-limonène.

9. Composition décapante selon l'une des revendications 1 à 3, **caractérisée en ce que** le dispersant (F) est l'ester phosphorique acide du 2-éthylhéxanol.

10. Utilisation d'une composition selon l'une quelconque des revendications 1 à 9 dans le domaine du bâtiment pour le décapage des revêtement organiques extérieurs.

11. Utilisation selon la revendication 10, pour le décapage des imperméabilités de façade, des revêtements plastiques épais et des films minces.

12. Utilisation d'une composition selon l'une quelconque des revendications 1 à 9 dans le domaine du yachting pour le décapage des revêtements anti-fouling.

## Patentansprüche

1. Abbeizmittel-Zusammensetzung, **dadurch gekennzeichnet, dass** sie Folgendes umfasst:
(A) mindestens einen zweiwertigen Ester,
(B) mindestens ein dipolares aprotisches Lösungsmittel,
(C) mindestens einen anorganischen Füllstoff mit verdickenden Eigenschaften,
(D) Wasser,
(E) mindestens ein Aktivierungsmittel,
(F) mindestens ein Dispersionsmittel und
(G) mindestens ein cellulosisches Verdickungsmittel.

2. Abbeizmittel-Zusammensetzung nach Anspruch 1, **dadurch gekennzeichnet, dass** sie pro 100 Gewichtsteilen (A) + (B) + (C) + (D)+ (E) + (F) + (G) Folgendes umfasst:
- 10 bis 50 Gewichtsteile (A),
- 10 bis 30 Gewichtsteile (B),
- 20 bis 40 Gewichtsteile (C),
- 10 bis 25 Gewichtsteile (D),
- 1 bis 15 Gewichtsteile (E),
- 0,2 bis 2 Gewichtsteile (F) und
- 0,2 bis 1 Gewichtsteil (G).

3. Abbeizmittel-Zusammensetzung nach Anspruch 2, **dadurch gekennzeichnet, dass** sie pro 100 Gewichtsteilen (A) + (B) + (C) + (D) + (E) + (F) + (G) Folgendes umfasst:
- 25 bis 45 Gewichtsteile (A),
- 15 bis 25 Gewichtsteile (B),
- 25 bis 35 Gewichtsteile (C),
- 15 bis 20 Gewichtsteile (D),
- 1 bis 10 Gewichtsteile (E),
- 0,4 bis 1,2 Gewichtsteile (F) und
- 0,3 bis 0,6 Gewichtsteile (G).

4. Abbeizmittel-Zusammensetzung nach einem der Ansprüche 1 bis 3, **dadurch gekennzeichnet, dass** die zweiwertigen Ester (A) aus den zweiwertigen aliphatischen Estern, insbesondere den C₁-C₄-Alkyldiestern einer oder mehrerer zweiwertiger aliphatischer C₄-C₆-Säuren, ausgewählt sind.

5. Abbeizmittel-Zusammensetzung nach Anspruch 4, **dadurch gekennzeichnet, dass** der oder die zweiwertige/n Ester (A) aus Bernsteinsäuredimethylester, Glutarsäuredimethylester, Adipinsäuredimethylester und ihren Gemischen ausgewählt ist/sind.

6. Abbeizmittel-Zusammensetzung nach einem der Ansprüche 1 bis 3, **dadurch gekennzeichnet, dass** das oder die dipolare/n aprotische/n Lösungsmittel (B) aus Dimethylsulfoxid, N-Methylpyrrolidon, Propylencarbonat, Dimethylformamid, Acetonitril, N-Methylmorpholin, Butyrolacton und Dimethylacetamid ausgewählt ist/sind.

7. Abbeizmittel-Zusammensetzung nach einem der Ansprüche 1 bis 3, **dadurch gekennzeichnet, dass** der anorganische Füllstoff (C) Calciumphosphit ist.

8. Abbeizmittel-Zusammensetzung nach einem der Ansprüche 1 bis 3, **dadurch gekennzeichnet, dass** das Aktivierungsmittel (E) Ethyl-3-ethoxypropionat und/oder D-Limonen ist.

9. Abbeizmittel-Zusammensetzung nach einem der Ansprüche 1 bis 3, **dadurch gekennzeichnet, dass** das Dispersionsmittel (F) 2-Ethylhexanolphosphorsäureester ist.

10. Verwendung einer Zusammensetzung nach einem der Ansprüche 1 bis 9 im Bausektor zum Abbeizen organischer Außenbeschichtungen.

11. Verwendung nach Anspruch 10 zum Abbeizen von Fassadenabschlüssen, starken Kunststoffbeschichtungen und dünnen Filmen.

12. Verwendung einer Zusammensetzung nach einem der Ansprüche 1 bis 9 im Segelsport zum Abbeizen von Anti-Fouling-Beschichtungen.

## Claims

1. Stripping composition, **characterized in that** it comprises:
(A) at least one dibasic ester,
(B) at least one dipolar aprotic solvent,
(C) at least one inorganic filler with a thickening nature,
(D) water,
(E) at least one activator,
(F) at least one dispersant, and
(G) at least one cellulose thickener.

2. Stripping composition according to Claim 1, **characterized in that** it comprises, per 100 parts by weight of (A) + (B) + (C) + (D) + (E) + (F) + (G):
- 10 to 50 parts by weight of (A),
- 10 to 30 parts by weight of (B),
- 20 to 40 parts by weight of (C),
- 10 to 25 parts by weight of (D),
- 1 to 15 parts by weight of (E),
- 0.2 to 2 parts by weight of (F), and
- 0.2 to 1 part by weight of (G).

3. Stripping composition according to Claim 2, **characterized in that** it comprises, per 100 parts by weight of (A) + (B) + (C) + (D) + (E) + (F) + (G):
- 25 to 45 parts by weight of (A),
- 15 to 25 parts by weight of (B),
- 25 to 35 parts by weight of (C),
- 15 to 20 parts by weight of (D),
- 1 to 10 parts by weight of (E),
- 0.4 to 1.2 parts by weight of (F), and
- 0.3 to 0.6 part by weight of (G).

4. Stripping composition according to one of Claims 1 to 3, **characterized in that** the dibasic esters (A) are chosen from aliphatic dibasic esters, in particular C₁-C₄ alkyl diesters of one or more C₄-C₆ aliphatic dibasic acids.

5. Stripping composition according to Claim 4, **characterized in that** the dibasic ester or esters (A) are chosen from dimethyl succinate, dimethyl glutarate, dimethyl adipate and their mixtures.

6. Stripping composition according to one of Claims 1 to 3, **characterized in that** the dipolar aprotic solvent or solvents (B) are chosen from dimethyl sulphoxide, N-methylpyrrolidone, propylene carbonate, dimethylformamide, acetonitrile, N-methylmorpholine, butyrolactone and dimethylacetamide.

7. Stripping composition according to one of Claims 1 to 3, **characterized in that** the inorganic filler (C) is calcium phosphite.

8. Stripping composition according to one of Claims 1 to 3, **characterized in that** the activator (E) is ethyl 3-ethoxypropionate and/or D-limonene.

9. Stripping composition according to one of Claims 1 to 3, **characterized in that** the dispersant (F) is the acidic phosphoric ester of 2-ethylhexanol.

10. Use of a composition according to any one of Claims 1 to 9 in the construction field for the stripping of external organic coatings.

11. Use according to Claim 10 for the stripping of exterior waterproof coatings, thick plastic coatings and thin films.

12. Use of a composition according to any one of Claims 1 to 9 in the yachting field for the stripping of antifouling coatings.
